Europäisches Patentamt

(19) European Patent Office

Office européen des brevets

(11) Numéro de publication: **0 083 883**
**B1**

(12) **FASCICULE DE BREVET EUROPEEN**

(45) Date de publication du fascicule du brevet:
27.02.85

(21) Numéro de dépôt: **82402291.7**

(22) Date de dépôt: **14.12.82**

(51) Int. Cl.⁴: **H 04 N 5/38**

(54) Emetteur de télévision comportant un dispositif de commutation de deux voies à très haute fréquence.

---

(30) Priorité: **22.12.81 FR 8123955**

(43) Date de publication de la demande:
**20.07.83 Bulletin 83/29**

(45) Mention de la délivrance du brevet:
**27.02.85 Bulletin 85/9**

(84) Etats contractants désignés:
**AT BE CH DE GB IT LI LU NL SE**

(56) Documents cités:
**ELECTRONIQUE ET MICROELEKTRONIQUE
INDUSTRIELLES, no. 223, 15 juin 1976, pages 33-37,
Paris, FR REGHINOT: "Le pilotage des emetteurs radio
et TV par pynthétiseurs de fréquence"
TELECOMMUNICAITON AND RADIO ENGINEERING,
vol. 30/31, no. 8, août 1976, Washington, US
KOZLOVSKIY et al.: "Automatic systems for monitoring
and control of standby television transmitters"**

(73) Titulaire: **THOMSON-CSF, 173, Boulevard Haussmann,
F-75379 Paris Cedex 08 (FR)**

(72) Inventeur: **Ta, Hong-Anh, THOMSON-CSF SCPI 173, bld
Haussmann, F-75379 Paris Cedex 08 (FR)**

(74) Mandataire: **Turlèque, Clotilde et al, THOMSON-CSF
SCPI 173, Bld Haussmann, F-75379 Paris Cedex 08 (FR)**

---

ACTORUM AG

## Description

La présente invention se rapporte aux émetteurs de télévision comportant un dispositif de commutation de deux voies à très haute fréquence.

Généralement les émetteurs de télévision sont pilotés par un synthétiseur de fréquence. Par mesure de sécurité, un deuxième oscillateur, appelé pilote, est prévu pour générer les signaux nécessaires à l'émetteur lorsque le synthétiseur est défectueux. Ce pilote, qui peut être interne à l'équipement émetteur, est commandé manuellement par un opérateur dès l'apparition d'une défaillance du synthétiseur (voir, par exemple, l'article paru dans «Electronique et Microélectronique industrielles» N° 223, le 15 juin 1976, pp. 33 à 37, Paris, par Reghinot, intitulé: «Le pilotage des émetteurs radio et TV par synthétiseurs de fréquence»).

Un tel dispositif de sécurité, du fait qu'il nécessite l'intervention humaine pour être enclenché, conduit à un arrêt de durée notable de l'émission de télévision lorsque le synthétiseur de fréquence est défaillant.

Par ailleurs, pour des raisons de stabilité, il est nécessaire d'alimenter en permanence le pilote; or, avec les dispositifs de commutation connus utilisant des relais mécaniques, l'isolation entre les deux voies n'est pas toujours suffisante et un phénomène de battement à basse fréquence peut apparaître, qui perturbe le signal émis.

La présente invention a pour but de remédier aux inconvénients précités. Cela est obtenu, en particulier, grâce à une commutation automatique des deux voies et à l'utilisation d'interrupteurs électroniques permettant une isolation de l'ordre de 80 dB entre les deux voies, alors qu'elle n'est généralement que de l'ordre de 40 dB avec les relais mécaniques.

La présente invention a pour objet un émetteur de télévision comportant un dispositif de commutation de deux voies à très haute fréquence dont l'une est alimentée par un synthétiseur de fréquence interne à l'émetteur, pilotant l'ensemble de l'équipement émetteur, et dont l'autre est alimentée en permanence par un pilote interne à l'émetteur, caractérisé en ce que le dispositif de commutation comporte: un circuit de détection automatique pour détecter une défaillance éventuelle du synthétiseur et un premier et un second interrupteur électronique présentant une très grande impédance quand ils sont respectivement ouverts, ou branchés en série avec les deux voies pour déconnecter le synthétiseur et connecter le pilote en fonction de la valeur du signal de sortie du circuit de détection.

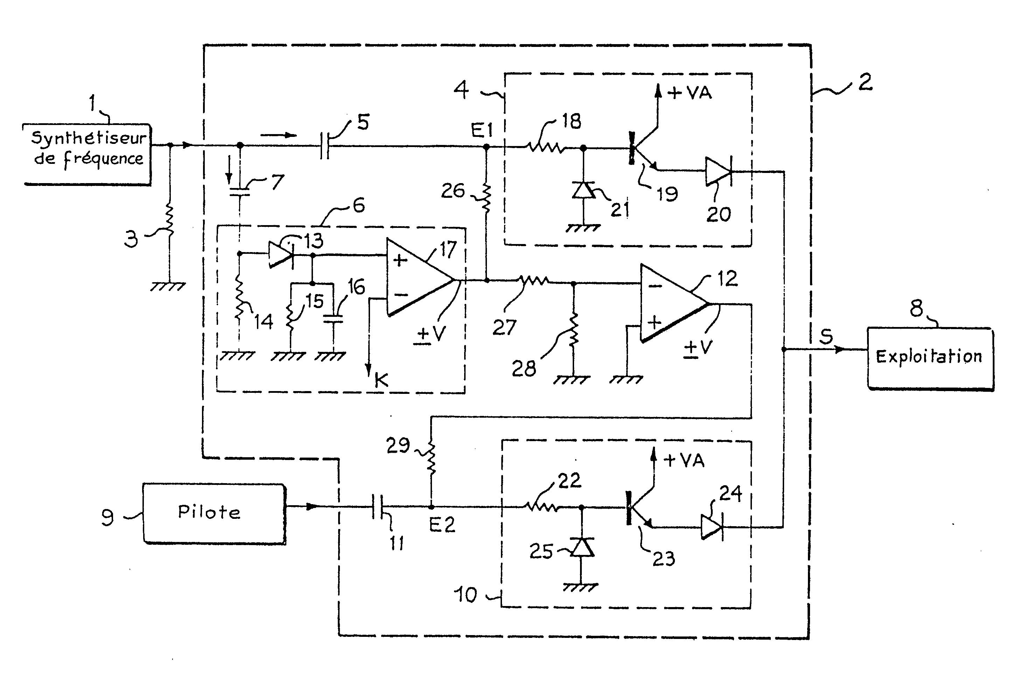

D'autres particularités et avantages de l'invention apparaîtront clairement dans la description suivante présentée à titre d'exemple non limitatif en regard de la figure unique annexée qui représente le schéma partiel d'un émetteur de télévision comportant un dispositif de commutation conforme à l'invention.

Un synthétiseur de fréquence 1 émet un signal radiofréquence situé dans la gamme des très hautes fréquences, VHF, permettant de piloter un émetteur TV. Ce signal est transmis à l'entrée d'une première voie VHF d'un commutateur automatique 2, à haute isolation, adaptée en impédance par une résistance 3. Ce signal est appliqué à l'entrée E1 d'un interrupteur VHF 4 par l'intermédiaire d'un condensateur de liaison 5. Ce signal est également transmis à un circuit de détection 6 par l'intermédiaire d'un condensateur de liaison 7. Ce circuit de détection 6 permet de détecter la présence du signal VHF par comparaison du niveau de tension continue de ce signal, préalablement redressé, à un seuil prédéterminé. Si ce niveau de tension est supérieur ou égal à ce seuil prédéterminé, le circuit 6 commande la fermeture de l'interrupteur 4 et le signal VHF est dirigé vers la sortie S reliée à un circuit d'exploitation 8.

Un pilote 9 est prévu pour se substituer au synthétiseur lorsque celui-ci est en panne ou est défaillant. Ce pilote émet un signal VHF pendant toute la durée de fonctionnement de l'émetteur. Ce signal est transmis à l'entrée adaptée d'une deuxième voie VHF du commutateur 2, puis il est appliqué à l'entrée E2 d'un interrupteur VHF 10 par l'intermédiaire d'un condensateur de liaison 11. L'entrée E2 reçoit également un signal de commande d'un comparateur 12 monté en circuit inverseur; l'entrée du comparateur 12 est couplée à la sortie du circuit de détection 6. Lorsque le circuit 6 a commandé la fermeture de l'interrupteur 4, le comparateur 12 commande l'ouverture de l'interrupteur 10 et vice versa. Lorsque l'interrupteur 10 est fermé, le signal VHF est dirigé vers la sortie S et le circuit d'exploitation 8.

Les deux interrupteurs 4 et 10 ont la même fonction, mais travaillent de manière antagoniste. Lorsque l'un est ouvert, l'autre est fermé. Pour cela, l'interrupteur ouvert présente une très haute impédance vis-à-vis du signal incident et la voie correspondante est déconnectée tandis que l'interrupteur fermé présente une très faible impédance vis-à-vis de ce même signal.

Le circuit de détection 6 comprend une diode 13 dont l'anode est reliée au condensateur 7. Une résistance 14 est connectée entre le point commun de la diode 13 et du condensateur 7 et la masse. Un filtre 15-16 constitué par un circuit RC en parallèle est connecté entre la cathode de la diode 13 et la masse, cette cathode étant reliée à l'entrée + d'un comparateur à seuil 17. Ce comparateur 17 reçoit sur son entrée − une tension prédéterminée K. La diode 13 sert à détecter le signal issu du synthétiseur. Lorsque le synthétiseur fonctionne correctement, cette diode est passante, le signal ainsi redressé est filtré, et la composante continue de ce signal est reçue par l'entrée + du comparateur 17. Si la valeur de cette composante continue est supérieure au seuil prédéterminé, le comparateur délivre une tension +V égale à +12 V. Si la valeur de cette composante continue est inférieure au seuil prédéterminé, le comparateur délivre une tension −V.

Le premier interrupteur 4 comprend une résistance 18 de 220 Ω reliée à la base d'un transistor NPN 19 monté en collecteur commun, de type

3

4

2N5943. Le collecteur est alimenté par une tension positive VA (+24 V) et l'émetteur est relié à l'anode d'une diode PIN 20 de type HP5082-3080, la cathode de cette diode étant reliée à la sortie S. L'interrupteur 4 comprend également une deuxième diode PIN 21 de même type, dont la cathode est reliée à la base du transistor 19 et dont l'anode est reliée à la masse. Le deuxième interrupteur 10 est identique au premier et ses éléments portent les mêmes références, augmentées de quatre unités (22-25).

La sortie du comparateur 17 est reliée, d'une part, à l'entrée E1 par l'intermédiaire d'une résistance 26 et, d'autre part, au comparateur 12 par l'intermédiaire d'un pont diviseur constitué de deux résistances 27, 28 en série, permettant ainsi d'abaisser le niveau de la tension appliquée sur l'entrée − du comparateur 12 dont l'entrée + est à la masse. La sortie du comparateur 12 est relié à l'entrée E2 par l'intermédiaire d'une résistance 29. Les résistances 26 et 29 sont très grandes par rapport aux résistances 18 et 22, afin que les signaux issus du synthétiseur et du pilote passent respectivement à travers les résistances 18 et 22 et ne se dissipent pas dans les résistances 26 et 29.

Lorsque la tension de sortie du comparateur 17 est +V, la diode PIN 21 est polarisée en inverse, elle est bloquée et sa résistance parasite est presque infinie. Cette résistance parasite est donc très grande vis-à-vis de la résistance 18, le signal n'est pas atténué et arrive sur la base du transistor 19. La jonction base-émetteur de ce transistor 19 est polarisée en direct, le transistor est passant. La tension d'émetteur est alors suffisamment grande pour débloquer la diode PIN 20 qui présente une résistance sensiblement égale à 1 $\Omega$, tandis qu'elle présente une résistance pratiquement infinie lorsqu'elle est polarisée en inverse. Ainsi, l'interrupteur 4 est fermé et le signal du synthétiseur est transmis au circuit d'exploitation 8.

Par contre, le comparateur 12, ayant à son entrée − la tension obtenue à la sortie du pont diviseur 27-28, et qui est sensiblement égale à 1 V dans l'exemple décrit, délivre une tension égale à −V. La diode PIN 25 se trouve polarisée en direct et se met à conduire, sa résistance est alors très faible (1 $\Omega$). La jonction base-émetteur du transistor 23 étant polarisée en inverse, ce transistor 23 est donc bloqué et la tension d'émetteur de ce transistor n'est pas suffisante pour débloquer la diode PIN 24. L'interrupteur 10 est ouvert, le signal issu du pilote ne passe pas.

Lorsque le signal issu du synthétiseur est assez faible pour que la tension de sortie du comparateur 17 soit négative (−12 V), la diode 21 est polarisée en direct, le transistor 19 est bloqué et bloque la diode 20. L'interrupteur 4 est ouvert, aucun signal ne peut passer. Par contre, la sortie du comparateur 12 passe à +V (+12 V); la diode 25 est polarisée en inverse, le signal issu du pilote n'est pas affaibli, le transistor 23 conduit et débloque la diode 24 qui laisse passer le signal VHF issu du pilote.

Les isolations très importantes que donnent les interrupteurs 4, 10 sont dues à la très forte atténuation du signal VHF au niveau des diodes 21 ou 25 (lorsqu'elles sont passantes), puis au blocage des signaux par l'intermédiaire des transistors 19, 23 et des diodes 20 et 24, qui ont une très grande impédance lorsqu'elles sont bloquées.

## Revendications

1. Emetteur de télévision comportant un dispositif de commutation de deux voies à très haute fréquence, dont l'une est alimentée par un synthétiseur de fréquence (1) interne à l'émetteur, pilotant l'ensemble de l'équipement émetteur, et dont l'autre est alimentée en permanence par un pilote (9) interne à l'émetteur, caractérisé en ce que le dispositif de commutation comporte: un circuit de détection automatique (6) pour détecter une défaillance éventuelle du synthétiseur et un premier (4) et un second (10) interrupteur électroniques présentant une très grande impédance quand ils sont ouverts, respectivement branchés en série avec les deux voies pour déconnecter le synthétiseur et connecter le pilote en fonction de la valeur du signal de sortie du circuit de détection.

2. Emetteur de télévision selon la revendication 1, caractérisé en ce que le circuit de détection (6) détecte la présence du signal VHF du synthétiseur par redressement et filtrage du signal de sortie du synthétiseur, puis comparaison du niveau de tension continue de ce signal redressé et filtré à un seuil prédéterminé, et en ce que le circuit de détection est couplé à l'un (10) des deux interrupteurs par un circuit inverseur (12).

3. Emetteur de télévision selon la revendication 2, caractérisé en ce que le circuit de détection (6) comprend, en série, une diode (13) de redressement, un circuit RC (15-16) de filtrage du signal détecté par la diode afin d'obtenir un signal continu, un comparateur à seuil (17) dont l'entrée + reçoit le signal détecté et filtré, dont l'entrée − reçoit un signal de seuil (K) et dont la sortie délivre un signal d'amplitude déterminée (+V, −V).

4. Emetteur de télévision selon la revendication 2, caractérisé en ce que le premier interrupteur (4) comprend: une entrée (E1) reliée à la sortie du synthétiseur par l'intermédiaire d'un condensateur de liaison (5) et reliée à la sortie du circuit de détection (6) par l'intermédiaire d'une première résistance (26); une première diode PIN (21) dont l'anode est reliée à la masse et dont la cathode est reliée à l'entrée (E1) par l'intermédiaire d'une deuxième résistance (18); un transistor NPN (19) monté en collecteur commun, dont la base est reliée à la cathode de la première diode PIN et dont l'émetteur est relié à l'anode d'une deuxième diode PIN (20), la cathode de cette deuxième diode étant reliée à la sortie (S) du commutateur.

5. Emetteur de télévision selon la revendication 2, caractérisé en ce que le deuxième interrupteur (10) comprend: une entrée (E2) reliée à la sortie du pilote (9) par l'intermédiaire d'un condensateur de liaison (11) et couplée à la sortie du circuit inverseur (12); une première diode PIN (25) dont l'anode est reliée à la masse, dont la cathode est reliée à l'entrée (E2) par l'intermédiaire d'une résistance (22) ; un transistor NPN (23) monté en collecteur commun, dont la base est reliée à la cathode de la première diode PIN et dont l'émetteur est relié à l'anode d'une deuxième diode PIN (24), la cathode de cette deuxième diode étant reliée à la sortie (S) du commutateur.

6. Emetteur de télévision selon la revendication 2, caractérisé en ce que le circuit inverseur (12) est un comparateur à zéro dont l'entrée − est reliée à la sortie du circuit de détection (6) par l'intermédiaire d'un pont diviseur (27-28), et dont la sortie est reliée à l'entrée (E2) du deuxième interrupteur (10) par l'intermédiaire d'une résistance (29).

## Patentansprüche

1. Fernsehsender mit einer Vorrichtung zur Umschaltung von zwei sehr hochfrequenten Kanälen, wovon der eine durch eine interne Frequenzsyntheseeinrichtung (1) des Senders gespeist wird, welche die gesamte Senderausrüstung ansteuert, und der andere dauernd durch eine interne Piloteinrichtung (9) des Senders gespeist wird, dadurch gekennzeichnet, dass die Umschaltvorrichtung umfasst: eine automatische Detektionsschaltung (6) zur Erfassung eines eventuellen Defektes der Syntheseeinrichtung und einen ersten (4) sowie einen zweiten (10) elektronischen Unterbrecher, die eine sehr hohe Impedanz im geöffneten Zustand aufweisen und jeweils in Serie mit dem einem bzw. anderen der zwei Kanäle geschaltet sind, um in Abhängigkeit vom Wert des Ausgangssignals der Detektionsschaltung die Syntheseeinrichtung abzuschalten und die Piloteinrichtung anzuschalten.

2. Fernsehsender nach Anspruch 1, dadurch gekennzeichnet, dass die Detektionsschaltung (6) die Anwesenheit des VHF-Signals der Syntheseinrichtung durch Gleichrichtung und Siebung des Ausgangssignals der Syntheseeinrichtung und anschliessendes Vergleichen des Gleichspannungspegels dieses gleichgerichteten und gesiebten Signals mit einem vorbestimmten Schwellwert erfasst, und dass die Detektionsschaltung an einen (10) der zwei Unterbrecher durch eine Inverterschaltung (12) angekoppelt ist.

3. Fernsehsender nach Anspruch 2, dadurch gekennzeichnet, dass die Detektionsschaltung (6) in Reihenschaltung eine Gleichrichterdiode (13), eine RC-Siebschaltung (15-16) für das durch die Diode gleichgerichtete Signal zur Gewinnung eines Gleichspannungssignals und einen Schwellwertkomparator (17) umfasst, dessen Eingang + das gleichgerichtete und gesiebte Signal und dessen Eingang − ein Schwellwertsignal (K) empfängt, während sein Ausgang ein Signal vorbestimmter Amplitude (+V, −V) abgibt.

4. Fernsehsender nach Anspruch 2, dadurch gekennzeichnet, dass der erste Unterbrecher (4) umfasst: einen mit dem Ausgang der Syntheseeinrichtung über einen Koppelkondensator (5) verbundenen Eingang (E1), der mit dem Ausgang der Detektionsschaltung (6) über einen ersten Widerstand (26) verbunden ist; eine erste PIN-Diode (21), deren Anode mit der Masse und deren Kathode mit dem Eingang (E1) über einen zweiten Widerstand (18) verbunden ist; einen NPN-Transistor (19), der in Kollektorschaltung geschaltet ist und dessen Basis mit der Kathode der ersten PIN-Diode verbunden ist, während sein Emitter mit der Anode einer zweiten PIN-Diode (20) verbunden ist, deren Kathode mit dem Ausgang (S) des Umschalters verbunden ist.

5. Fernsehsender nach Anspruch 2, dadurch gekennzeichnet, dass der zweite Unterbrecher (10) umfasst: einen mit dem Ausgang der Piloteinrichtung (9) über einen Koppelkondensator (11) verbundenen Eingang (E2), der an den Ausgang der Inverterschaltung (12) angekoppelt ist; eine erste PIN-Diode (25), deren Anode mit der Masse verbunden und deren Kathode mit dem Eingang (E2) über einen Widerstand (22) verbunden ist; einen NPN-Transistor (23), der in Kollektorschaltung geschaltet ist und dessen Basis mit der Kathode der ersten PIN-Diode verbunden ist, während sein Emitter mit der Anode einer zweiten PIN-Diode (24) verbunden ist, deren Kathode mit dem Ausgang (S) des Umschalters verbunden ist.

6. Fernsehsender nach Anspruch 2, dadurch gekennzeichnet, dass die Inverterschaltung (12) ein mit Null vergleichender Komparator ist, dessen Eingang − mit dem Ausgang der Detektionsschaltung (6) über eine Teilerbrücke (27-28) verbunden ist und dessen Ausgang mit dem Eingang (E2) des zweiten Unterbrechers (10) über einen Widerstand (29) verbunden ist.

## Claims

1. Television transmitter comprising a device for switching two very high frequency channels one of which is fed by an internal frequency synthesizer (1) of the transmitter piloting the entire transmitter equipment and the other of which is permanently fed by an internal pilot (9) of the transmitter, characterized in that the switching device comprises: an automatic detection circuit (6) for detecting an eventual failure of the synthesizer and first (4) and second (10) electronic interrupters having a very high impedance when they are open, respectively connected in series with the two channels for disconnecting the synthesizer and connecting the pilot in function of the value of the output signal of the detection circuit.

2. Television transmitter according to Claim 1, characterized in that the detection circuit (6) detects the presence of the VHF signal of the synthesizer by rectifying and filtering the output signal of the synthesizer and comparing the level of the direct voltage obtained from this rectified and filtered signal to a predetermined threshold, and in that the detection circuit is coupled to one (10) of the two interrupters through an inverter circuit (12).

3. Television transmitter according to Claim 2, characterized in that the detection circuit (6) comprises, in series, a rectifier diode (13), an RC circuit (15-16) for filtering the signal detected by the diode for obtaining a direct signal, a threshold comparator (17) the input + of which receives the detected an filtered signal, the input − receiving a threshold signal (K) and the output of which supplies a signal of determined amplitude (+V, −V).

4. Television transmitter acording to Claim 2, characterized in that the first interrupter (4) comprises: an input (E1) connected to the output of the synthesizer through a coupling capacitor (5) and connected to the output of the detection circuit (6) through a first resistor (26); a first PIN diode (21) the anode of which is connected to ground and the cathode of which is connected to the input (E1) through a second resistor (18); a NPN transistor (19) mounted incommon collector and the base of which is connected to the cathode of the first PIN diode and the emitter of which is connected to the anode of a second PIN diode (20), the cathode of which being connected to the output (S) of the switch.

5. Television transmitter according to Claim 2, characterized in that the second interrupteur (10) comprises: an input (E2) connected to the output of the pilot (9) through a coupling capacitor (11) and coupled to the output of the inverter circuit (12); a first PIN diode (25) the anode of which is connected to ground, the cathode of which is connected to the input (E2) through a resistor (22); a NPN transistor (23) mounted in common collector and the base of which is connected to the cathode of the first PIN diode and the emitter of which is connected to the anode of a second PIN diode (24), the cathode of this second diode being connected to the output (S) of the switch.

6. Television transmitter according to Claim 2, characterized in that the inverter circuit (12) is a comparator comparing to zero and the input − of which is connected to the detection circuit (6) through a divider bridge (27-28) and the output of which is connected to the input (E2) of the second interrupter (10) through a resistor (29).